# FASCICULE DE BREVET EUROPEEN

(11) **EP 0 640 948 B1**
(45) Date de publication et mention de la délivrance du brevet: **19.11.1997**
(21) Numéro de dépôt: 94401781.3
(22) Date de dépôt: 02.08.1994
(51) Int. Cl.: G09B 21/00

(54) **Appareil braille interactif**
Interaktives Blindenschriftgerät
Interactive braille apparatus

(30) Priorité: 27.08.1993 FR 9310326
(43) Date de publication de la demande: 01.03.1995
(73) Titulaire: Montane, Ioan, F-75019 Paris (FR)
(72) Inventeur: Montane, Ioan, F-75019 Paris (FR)
(74) Mandataire: Plaçais, Jean-Yves

(56) Documents cités:
- EP-A- 0 061 595
- EP-A- 0 284 113
- FR-A- 2 655 911
- IBM TECHNICAL DISCLOSURE BULLETIN., vol.18, no.12, Mai 1976, NEW YORK US pages 4150 - 4151 E.G. NASSIMBENE AND L.D. STEVENS 'Display for the blind'

## Description

L'invention concerne l'aide aux aveugles en matière informatique.

On sait qu'un aveugle manipule un clavier mieux qu'un voyant. Par contre, lui faire percevoir ce qui est sur un écran est un problème considérable.

Une solution connue consiste à prévoir une ligne de lecture Braille, définie par une pluralité de modules tactiles adjacents les uns aux autres. On sait piloter électriquement de tels modules pour leur faire afficher un contenu modifiable sur commande, en correspondance de l'écran par exemple.

L'interaction homme/machine comporte également la commande du curseur. Il a été proposé que l'appel du curseur sur la cellule Braille soit fait par des contacts placés en parallèle sur ces cellules Braille pilotées, voir par exemple EP-A-0 284 113.

Cependant, la place disponible pour loger ces contacts est faible; les propositions connues ont donc recours à des interrupteurs ultra-plats ou cellule optique de technologie complexe et délicate, ce qui a pour inconvénient de rendre onéreux et peu fiables les appareils de la technique antérieure.

De plus, de nombreux autres problèmes se posent, car les conditions d'ergonomie requises lorsqu'un aveugle travaille avec un appareil braille sont très sensiblement différentes de celles que l'on rencontre habituellement.

Dans beaucoup d'applications qu'utilisent les appareils Braille, l'identification de chaque cellule est primordiale comme par exemple dans le pupitre opérateur aveugle utilisé en téléphonie.

La présente invention a pour but d'apporter des solutions plus satisfaisantes.

Le dispositif proposé est du type précité, comportant une rangée de modules tactiles allongés, placés côte à côte en épaisseur pour définir ensemble une rangée de cellules Braille modifiables, l'émergence de micro-plots dans chaque cellule étant commandée électriquement par le module concerné, ainsi qu'une rangée de contacts placés en regard des cellules Braille modifiables.

Selon un aspect de l'invention, les contacts sont des micro-interrupteurs, et il est prévu une rangée de capots qui définissent chacun une languette pivotante, de préférence par une charnière à amincissement, commandant le micro-interrupteur correspondant, languette associée à une partie fixe portant une zone d'affichage d'une information fixe en Braille relative à la cellule Braille modifiable concernée.

Avantageusement, la zone d'affichage reçoit une bande munie, au format d'une cellule braille, de cercles embossés saillants et de cercles non embossés, les deux types de cercles étant différemment remplis par sérigraphie, de sorte que la cellule Braille est lisible aussi bien au toucher que visuellement.

Dans un mode de réalisation intéressant, les contacts de type micro-interrupteurs sont montés sur un circuit imprimé commun posé transversalement sur la rangée de modules. De préférence, le circuit imprimé est prévu en outre avec des encoches pour le passage de l'extrémité recourbée de la partie pivotante du capot et avec des trous qui accueillent les pieds de la partie fixe du capot et la vis de fixation. La partie fixe de chaque capot peut alors être prévue avec au moins un pied de fixation sur le circuit imprimé. Chaque languette peut comporter à son extrémité libre une patte recourbée qui forme limitation de course en coopération avec le dessous du micro-interrupteur associé. Le revers de chaque languette peut être muni d'un embossage transversal cylindrique pour assurer un contact en ligne avec le micro-interrupteur.

Selon un autre aspect de l'invention, la série de languettes, considérée transversalement, présente une allure sinusoïdale, ce qui permet d'actionner sélectivement une seule languette avec un doigt de diamètre nettement plus grand que la largeur de cettte languette. De plus, chaque languette peut être munie d'une nervure de guidage longitudinale, ce qui permet la conduite du doigt pour pouvoir passer de la cellule braille modifiable à la zone d'information fixe en Braille, et vice versa.

D'autres caractéristiques et avantages de l'invention apparaîtront à l'examen de la description détaillée ci-après, et des dessins annexés, sur lesquels :
- la figure 1 est le dessin schématique d'un appareil braille pour aveugles comprenant le dispositif de l'invention ; et
- les figures 2A à 2E sont des vues partielles qui se correspondent et montrent ensemble l'interaction des éléments selon l'invention, avec une vue de dessus (2B), une coupe longitudinale selon la ligne A-A (2A), une coupe transversale selon la ligne B-B (2C), une vue de dessus dégagée (2D), et une vue d'une bande (2E).

Les dessins annexés comportent des éléments de caractère certain. En conséquence, ils sont à considérer comme partie intégrante de la description, et pourront non seulement servir à mieux faire comprendre celle-ci, mais aussi contribuer à la définition de l'invention, le cas échéant.

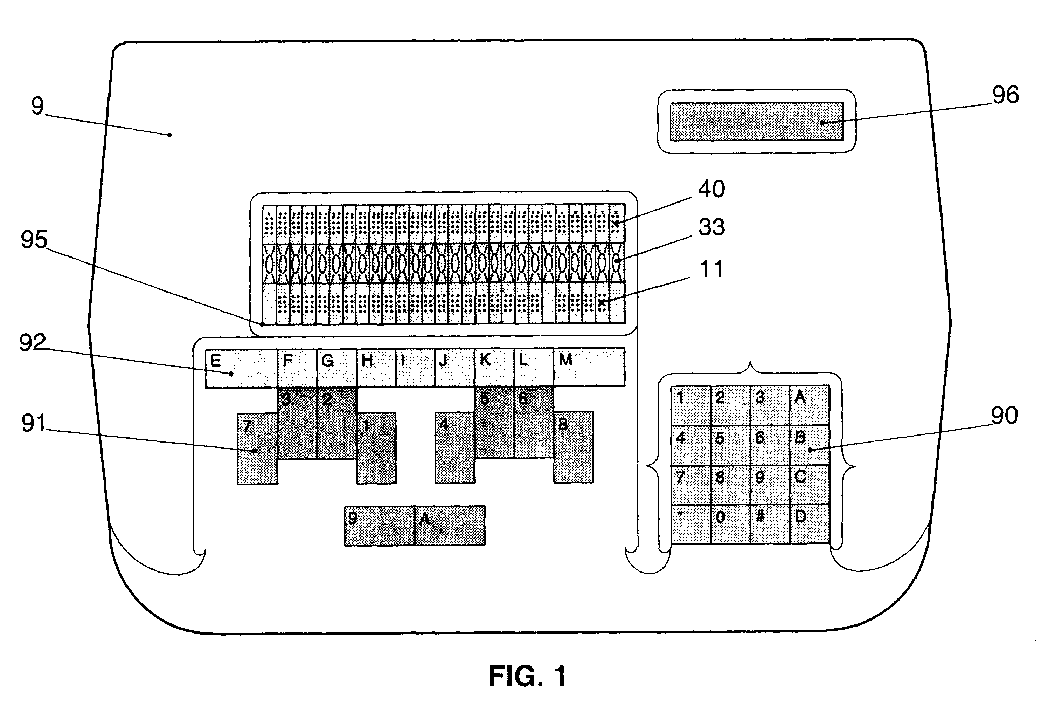

Sur la figure 1, l'appareil comprend un pavé numérique 90, un clavier Braille 91, une rangée de touches de fonction 92, et en 95 la partie visible du dispositif selon l'invention, et un affichage à cristaux liquides 96.

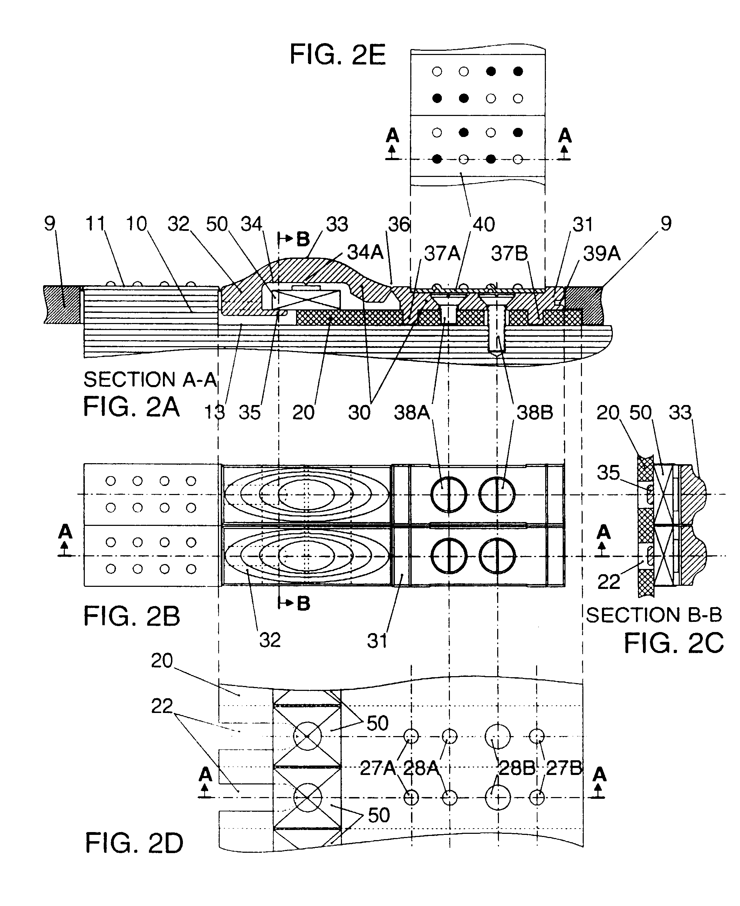

Ce dispositif comprend un module tactile 10 (figures 2), qui est par exemple le modèle SC2 vendu par la société japonaise K.G.S. domiciliée à 2-25-7 HIGASHINO, URAYASU CITY 279. Sa zone 11 qui définit une cellule Braille modifiable, à l'aide de huit pistons dont le déplacement est commandé électriquement.

Sur les figures 2, une série de modules 10 est placée côte à côte, ce qui est schématisé par deux modules en figure 2B. Sur leur face 13 est placé tout d'abord un circuit imprimé 20, muni de micro-interrupteurs 50 (figure 2D). En regard de chaque module 10, le circuit imprimé 20 reçoit une rangée de capots tels que 30 et la rangée de capots ainsi définie reçoit une bande autocollante 40, comme on le verra ci-après. L'ensemble peut être encadré par la paroi externe 9 du boîtier de l'appareil Braille considéré.

Le circuit imprimé 20 est un circuit imprimé double face, agencé pour permettre un adressage matriciel de micro-interrupteurs tels que 50. En regard de chaque micro-interrupteur, le circuit imprimé définit un ou des trous pour pions de centrage tels que 27A et 27B, un ou des trous de fixation tels que 28A et 28B et une encoche 22 pour passer l'extrémité recourbée 35 de la partie pivotante du capot.

Sur les figures 2A à 2C, la structure de chacun des capots 30 est mieux représentée.

Un tel capot comporte une partie fixe 31, réunie par une charnière à amincissement 36 à une partie mobile ou languette 32. En haut, la languette 32 comporte une bosse 33 dont le profil transversalement au plan de la figure a une allure sinusoïdale. En dessous, la languette est évidée en 34 pour loger le micro-interrupteur 50; elle comporte un embossage 34A pour assurer la commande fidèle du contact du micro-interruupteur. A l'extrémité libre de la languette pivotante 32, et en dessous, il est prévu une patte recourbée 35 qui vient se placer sous le micro-interrupteur 50, pour limiter la course de la languette 32.

De son côté, la partie fixe 31 comporte deux plots 37A et 37B propres à se loger dans les évidements homologues tels que 27A et 27B (figure 2D) du circuit imprimé 20. Elle définit également un emplacement en cuvette pour la bande 40 sur laquelle on reviendra plus loin. Dans cet emplacement sont prévus un ou plusieurs trous 28 pour des vis de fixation 38 qui prennent, soit sur le circuit imprimé 20 seulement (38A), soit sur le corps du module 10 sous-jacent (38B).

Les figures 2A et 2C montrent que la patte 35 traverse également une encoche allongée 22 du circuit imprimé 20.

La bande 40 (figure 2E) est une bande plate autocollante munie, au format d'une cellule Braille, de cercles embossés saillants et de cercles non embossés, les deux types de cercles étant différemment remplis par sérigraphie, de sorte que l'information de la cellule Braille est lisible aussi bien au toucher que visuellement.

On remarquera aussi que la zone 33 de chaque languette définit une nervure de guidage longitudinal, qui permet la conduite du doigt de l'aveugle pour passer de la cellule Braille modifiable 10 à la zone d'information fixe en Braille correspondante, et vice versa, tout en pouvant commander au passage le micro-interrupteur associé à ces deux informations.

Le montage est particulièrement compact et commode, puisque les capots 32 affleurent la surface des cellules Braille modifiables 11, et se trouvent logés entre ces cellules Braille modifiables et la partie fixe 31 prévue avec la bande 40 portant les informations fixes en Braille. Eventuellement, on munit la partie extrême fixe du capot d'une encoche 39A qui permet d'y insérer la paroi de l'appareil Braille et de démonter le capot 30 pour des raisons de maintenance.

On notera sur la figure 1 la présence de cellules Braille "aveugles", c'est-à-dire qu'il y a seulement le contact et l'information Braille fixe.

## Revendications

1. Dispositif formant appareil Braille interactif pour aveugles, comportant une rangée de modules tactiles (10), placés côte à côte en épaisseur pour définir ensemble une rangée de cellules Braille modifiables (11), l'émergence de micro-plots dans chaque cellule étant commandée électriquement par le module concerné, ainsi qu'une rangée de contacts placés en regard des cellules Braille modifiables,
caractérisé en ce que les contacts sont des micro-interrupteurs (50), et en ce qu'il est prévu une rangée de capots (30) qui définissent chacun une languette pivotante (32) commandant le micro-interrupteur correspondant, languette associée à une partie fixe (31) portant une zone d'affichage d'une information fixe en Braille (40) relative à la cellule Braille modifiable concernée.

2. Dispositif selon la revendication 1, caractérisé en ce que les charnières (36) des capots sont du type à amincissement.

3. Dispositif selon l'une des revendications précédentes, caractérisé en ce que la zone d'affichage (40) reçoit une bande munie, au format d'une cellule braille, de cercles embossés saillants et de cercles non embossés, les deux types de cercles étant différemment remplis par sérigraphie, de sorte que la cellule Braille est lisible aussi bien au toucher que visuellement.

4. Dispositif selon l'une des revendications précédentes, caractérisé en ce que les micro-interrupteurs (50) sont montés sur un circuit imprimé commun (20) posé transversalement sur la rangée de modules.

5. Dispositif selon la revendication 4, caractérisé en ce que le circuit imprimé est prévu en outre avec des encoches (22) pour le passage de l'extrémité recourbée (35) de la partie pivotante du capot et avec des trous (27;28) qui accueillent les pieds (37) de la partie fixe du capot et la vis de fixation (38).

6. Dispositif selon la revendication précédente, caractérisé en ce que la partie fixe (31) de chaque capot est prévue avec au moins un pied de fixation sur le circuit imprimé.

7. Dispositif selon l'une des revendications précédentes, caractérisé en ce que chaque languette (32) comporte à son extrémité libre une patte recourbée (35) qui forme limitation de course en coopération avec le dessous du micro-interrupteur (50) associé.

8. Dispositif selon l'une des revendications précédentes, caractérisé en ce que le revers de chaque languette (32) est muni d'un embossage transversal cylindrique pour assurer un contact en ligne avec le micro-interrupteur (50).

9. Dispositif selon l'une des revendications précédentes, caractérisé en ce que, considérée transversalement, la série de languettes pivotantes (32) présente une allure sinusoïdale, ce qui permet d'actionner sélectivement une seule languette avec un doigt de diamètre nettement plus grand que la largeur de cettte languette.

10. Dispositif selon l'une des revendications précédentes, caractérisé en ce que chaque languette (32) est munie d'une nervure de guidage longitudinale, ce qui permet la conduite du doigt pour pouvoir passer de la cellule braille modifiable à la zone d'information fixe en Braille, et vice versa.

## Patentansprüche

1. Vorrichtung, die einen interaktiven Braille-Apparat für Blinde bildet, mit einer Reihe von Tastmodulen (10), die breitenmäßig nebeneinander plaziert sind, um zusammen eine Reihe von modifizierbaren Braille-Zellen (11) zu definieren, wobei das Hervortreten von Mikrostiften in jeder Zelle elektrisch durch das betroffene Modul gesteuert wird, und einer Reihe von gegenüber den modifizierbaren Braille-Zellen plazierten Kontakten, dadurch gekennzeichnet, daß die Kontakte Mikroschalter (50) sind, und daß eine Reihe von Hauben (30) vorgesehen ist, von denen jede eine gelenkige Zunge (32) definiert, die den entsprechenden Mikroschalter steuert, wobei die mit einem Festteil (31) verbundene Zunge eine Zone zum Anzeigen einer festen Information in Braille (40) relativ zu der betroffenen modifizierbaren Braillezelle trägt.

2. Vorrichtung nach Anspruch 1, dadurch gekennzeichnet, daß die Gelenke (36) der Hauben von dem sich verjüngenden Typ sind.

3. Vorrichtung nach einem der vorhergehenden Ansprüche, dadurch gekennzeichnet, daß die Anzeigezone (40) ein Band aufnimmt, das im Format einer Braille-Zelle mit vorstehenden geprägten Kreisen und nichtgeprägten Kreisen versehen ist, wobei die zwei Arten von Kreisen unterschiedlich durch Siebdruck aufgefüllt werden, so daß die Braille-Zelle sowohl durch Kontakt als auch optisch lesbar ist.

4. Vorrichtung nach einem der vorhergehenden Ansprüche, dadurch gekennzeichnet, daß die Mikroschalter (50) auf einer gemeinsamen gedruckten Schaltung (20) befestigt sind, die quer auf der Reihe von Modulen angeordnet ist.

5. Vorrichtung nach Anspruch 4, dadurch gekennzeichnet, daß die gedruckte Schaltung außerdem mit Kerben (22) für den Durchgang des gekrümmten Endes (35) der gelenkigen Teils der Haube und mit Löchern (27; 28) versehen ist, die die Füße (37) des Festteils der Haube und die Befestigungsschraube (38) aufnehmen.

6. Vorrichtung nach dem vorhergehenden Anspruch, dadurch gekennzeichnet, daß der Festteil (31) jeder Haube mit mindestens einem Befestigungsfuß auf der gedruckten Schaltung vorgesehen ist.

7. Vorrichtung nach einem der vorhergehenden Ansprüche, dadurch gekennzeichnet, daß jede Zunge (32) an ihrem freien Ende eine gekrümmte Klaue (35) umfaßt, die in Zusammenwirkung mit dem Unterteil des zugehörigen Mikroschalters (50) einen Anschlag bildet.

8. Vorrichtung nach einem der vorhergehenden Ansprüche, dadurch gekennzeichnet, daß die Rückseite jeder Zunge (32) mit einer zylindrischen Querprägung zur Sicherstellung eines Kontakts in einer Linie mit dem Mikroschalter (50) versehen ist.

9. Vorrichtung nach einem der vorhergehenden Ansprüche, dadurch gekennzeichnet, daß, quer betrachtet, die Reihe von gelenkigen Zungen (32) einen sinusförmigen Verlauf darbietet, was die gezielte Betätigung einer einzelnen Zunge mit einem Finger mit einem Durchmesser, der eindeutig größer als die Größe dieser Zunge ist, erlaubt.

10. Vorrichtung nach einem der vorhergehenden Ansprüche, dadurch gekennzeichnet, daß jede Zunge (32) mit einer Längsführungsrippe versehen ist, wodurch der Finger geführt werden kann, damit er von der modifizierbaren Braille-Zelle zu der festen Braille-Informationszone und umgekehrt fahren kann.

## Claims

1. Device forming an interactive Braille machine for blind persons comprising a row of tactile modules (10) placed side by side widthways to define together a row of modifiable Braille cells (11), the emergence of micro-pins in each cell being controlled electrically by the module concerned, and a row of contacts placed opposite the modifiable Braille cells, characterised in that the contacts are microswitches (50) and in that a row of caps (30) is provided, each of which defines a pivoting tab (32) controlling the corresponding microswitch, this tab being associated with a fixed part (31) bearing a display zone for fixed information in Braille (40) relating to the modifiable Braille cell concerned.

2. Device according to claim 1, characterized in that the hinges (36) of the caps are of the tapered type.

3. Device according to any of the previous claims, characterized in that the display zone (40) holds a strip bearing, in the form of a Braille cell, embossed projecting circles and non-embossed circles, the two types of circles being filled differently by serigraphy such that the Braille cell can be read both by touch and visually.

4. Device according to any of the previous claims, characterized in that the microswitches (50) are mounted on a common printed circuit board (20) placed transversely over the row of modules.

5. Device according to claim 4, characterized in that the printed circuit board also has notches (22) for the passage of the back-curved end (35) of the pivoting part of the cap, and with holes (27, 28) which hold the feet (37) of the fixed part of the cap and the fixing screw (38).

6. Device according to the previous claim, characterized in that the fixed part (31) of each cap has at least one fixing foot on the printed circuit board.

7. Device according to any of the previous claims, characterized in that each tab (32) has at its free end a back-curved lug (35) which forms a travel stop in cooperation with the underside of the associated microswitch (50).

8. Device according to any of the previous claims, characterized in that the back of each tab (32) has a transverse cylindrical embossed section to ensure a linear contact with the microswitch (50).

9. Device according to any of the previous claims, characterized in that viewed transversely, the row of pivoting tabs (32) has a sine-wave appearance which allows selective activation of a single tab with a finger of significantly larger diameter than the width of this tab.

10. Device according to any of the previous claims, characterized in that each tab (32) has a longitudinal guide rib which allows guidance of the finger for moving from the modifiable Braille cell to the fixed Braille information zone and vice versa.
